# EUROPÄISCHE PATENTSCHRIFT

(11) **EP 1 326 743 B1**
(45) Veröffentlichungstag und Bekanntmachung des Hinweises auf die Patenterteilung: **19.09.2007**
(21) Anmeldenummer: 01962957.5
(22) Anmeldetag: 30.08.2001
(51) Int. Cl.: B32B 17/10

(54) **VERBUNDSICHERHEITSGLASSCHEIBE MIT SOLLBRUCHSTELLE, VERFAHREN ZU DEREN HERSTELLUNG UND DEREN VERWENDUNG**
LAMINATED SAFETY GLASS WINDOWPANE, METHOD FOR THE PRODUCTION AND USE THEREOF
VITRE EN VERRE DE SECURITE FEUILLETE DOTEE D'UN POINT DE RUPTURE, SON PROCEDE DE FABRICATION ET SON UTILISATION

(30) Priorität: 11.09.2000 DE 10045006
(43) Veröffentlichungstag der Anmeldung: 16.07.2003
(73) Patentinhaber: Chemetall GmbH, 60487 Frankfurt (DE); Weidemann Unternehmensgruppe Holding und Geschäftsführungs- Gmbh, 30890 Barsinghausen (DE)
(72) Erfinder: SCHWAMB, Michael, 60325 Frankfurt (DE); WEINFURTNER, Hans, 92533 Wernberg-Köblitz (DE); HOLTMANN, Klaus, 30179 Hannover (DE); HERASIMTSCHUK, Jörg, 61440 Oberursel (DE); WEITZEL, Klaus, 60439 Frankfurt (DE)
(74) Vertreter: Seewald, Jürgen
(86) Internationale Anmeldenummer: PCT/EP2001/009617
(87) Internationale Veröffentlichungsnummer: WO 2002/020266

(56) Entgegenhaltungen:
- EP-A- 1 002 641
- DE-A- 4 428 690
- US-A- 3 505 160
- US-A- 5 350 613

## Beschreibung

Die Erfindung betrifft eine Verbundsicherheitsglasscheibe mit Sollbruchstelle, die sich z.B. für ein Notausstiegssystem, bzw. Noteinstiegssystem, verwenden lässt, sowie ein Verfahren zur Herstellung einer Verbundsicherheitsglasscheibe mit Sollbruchstelle und die Verwendung der Verbundsicherheitsglasscheibe mit Sollbruchstelle.

Verbundsicherheitsglasscheiben (VSG-Scheiben) mit einem Notausstiegssystem sind aus der DE 4428690 und der US 5350613 bekannt. Solche Verbundsicherheitsglasscheiben bestehen aus mindestens zwei Scheiben mit einer polymeren Zwischenschicht, wobei in der Zwischenschicht eine Sollbruchstelle enthalten ist.

Die in der DE 4428690 beschriebene Sollbruchstelle wird durch eine lokale Schwächung der zwischenliegenden polymeren Schicht dargestellt. Dies wird durch eine Verminderung der Haftung der Schicht am Glas oder aber zwischen unterschiedlichen Lagen der Schicht untereinander erreicht. Diese Lösung weist folgende Nachteile auf:

Wird die Haftung der Schicht an den beiden Glasscheiben reduziert, so ergibt sich im Falle einer Zerstörung der beiden Scheiben ein Spalt, in dem zwar das Glas von der Zwischenschicht abfällt, ein Raumabschluss aber immer noch durch die Zwischenschicht gegeben ist. Diese kann zwar gedehnt werden und reißt auch bei ausreichend hoher Belastung. Dadurch entsteht allerdings immer noch keine ausreichend große Öffnung in der Scheibe, und die Funktion eines Notausstiegs ist nicht gewährleistet. Ein weiteres ungerichtetes Aufreißen der Schicht ist nur dann möglich, wenn die Reißfestigkeit der polymeren Zwischenschicht relativ gering ist, was sich nachteilig auf die Funktion als Verbundsicherheitsglas auswirkt. Wird eine polymere Zwischenschicht mit höherer Reißfestigkeit verwendet, so muß diese unter Umständen mit einem zusätzlichen Werkzeug aufgeschnitten werden (Spalte 3, Absatz 1). Es ist jedoch damit zu rechnen, dass dies im Notfall einem sich evtl. in Panik befindlichen Fahrgast nicht geläufig ist. Durch das ungerichtete Aufreißen der polymeren Zwischenschicht entsteht zudem eine recht kleine Ausstiegsöffnung die von unregelmäßigen Risskanten gesäumt wird. Dadurch ist mit starken Schnittverletzungen beim Ausstieg durch die Öffnung im Glas zu rechnen.

Wird die Haftung zwischen unterschiedlichen Bereichen der polymeren Zwischenschicht weiter reduziert, so reduziert sich zwar der Aufwand zur Schaffung eines offenen Schlitzes in der Glasscheibe. Solch ein Schlitz ist jedoch immer noch nicht ausreichend, um schnell eine Notausstiegsöffnung schaffen zu können. Die Problematik der unorientierten Rissausbreitung in der polymeren Zwischenschicht bleibt ebenso erhalten, wie die begrenzte Reißfestigkeit der Zwischenschicht.

Um beide Scheiben der Verbundsicherheitsglaseinheit zu zertrümmern, ist ein dafür vorgesehener spitzer Hammer erforderlich. Bei einem stumpfen Schlagwerkzeug wirkt die Zwischenschicht als Stoßabsorber und es ist nicht möglich, durch die polymere Zwischenschicht zu der Oberfläche der zweiten Scheibe zu gelangen. Daher ist es mit einem anderen Werkzeug als mit einem spitzen Hammer (ESG Hammer) sehr schwer bis unmöglich, die zweite Glasscheibe zu zerstören.

Der Einsatz von Floatglas in der beschriebenen Verbundglasscheibe mit Notausstiegssystem ist nicht zu empfehlen, da sich beim Zertrümmern von Floatglas dolchartige scharfkantige Scherben bilden (zusätzliche Verletzungsgefahr) und diese dolchartigen Scherben die Sollbruchstelle überbrücken und somit deren Funktion einschränken.

Ein weiterer Nachteil besteht in der nur geringen Reißfestigkeit der Zwischenschicht. Dadurch kann es nach Herauslösen eines Scheibenteiles durch das Eigengewicht des noch im Rahmen verbliebenen Scheibenteiles zum Abreißen desselben kommen, was zu Verletzungen führen kann.

Die im US-Patent 5350613 beschriebene Verbundglasscheibe mit Sollbruchstelle ist mit folgenden Nachteilen behaftet: Die Durchdringung beider Scheiben am "Einschlagpunkt" mit nur einem Schlag ist nur mit einem ESG Hammer mit entsprechend langem Dorn möglich. Ein derartiger Hammer kann allerdings als Waffe gebraucht werden und wird deshalb als Sicherheitsrisiko eingestuft.

Die Sollbruchstelle wird mit doppelseitig klebendem Klebeband aus einem Schaumstoff ausgeführt. Die starke Dehnbarkeit und Komprimierbarkeit des Schaumstoffes kann zu Schwierigkeiten bei der Fertigung der Scheiben führen, da beim Befüllen mit Gießharz der hydrostatische Druck im Bereich der Sollbruchstelle zu einer Veränderung der Schichtstärke führt.

Eine geborstene Scheibe wird nur durch zwischen den Schaumstoffstücken bestehende Brücken aus ausgehärtetem reißfestem Gießharz zusammengehalten. Die Resttragfähigkeit solch einer geborstenen Scheibe kann bei Verwendung einer nicht genügend reißfesten Zwischenschicht ungenügend sein, was z.B. zum Abreißen der herausgelösten Glasbruchschicht und Herabfallen derselben auf Personen führen kann. Wird dagegen eine sehr reißfeste Zwischenschicht verwendet, wie sie zur Erreichung einer hohen Resttragfähigkeit benötigt würde, besteht die Gefahr, dass die Brücken aus Gießharz bei Belastung nicht reißen, was die Funktion des Notausstiegs einschränkt.

Aufgabe der vorliegenden Erfindung ist es, die beschriebenen Nachteile des Standes der Technik zu vermeiden und insbesondere eine Verbundsicherheitsglasscheibe (VSG-Scheibe) zu schaffen, bei der ohne spezielles Werkzeug eine Notausstiegsöffnung in der Scheibe hergestellt werden kann, um Personen im Inneren eines Fahrzeugs oder eines Gebäudes die Möglichkeit zu geben, dieses im Notfall durch diese Öffnung zu verlassen, bzw. Rettungskräften die Möglichkeit zu geben, ohne Spezialwerkzeug in das Innere eines Fahrzeugs oder eines Gebäudes vorzudringen. Die zerstörte, aber noch nicht geöffnete VSG-Scheibe soll eine solche Resttragfähigkeit aufweisen, dass die Sollbruchstelle nur durch eine gezielte Belastung derselben zu zertrennen ist (z.B. durch Drücken mit der Hand auf die VSG-Scheibe in direkter Nähe der Sollbruchstelle) und sich die VSG-Scheibe somit gezielt öffnen lässt. Ferner soll die Reißfestigkeit der Zwischenschicht so bemessen sein, dass der herausgelöste Teil der VSG-Scheibe nach dem Herauskippen aus der Verglasungseinheit nicht entlang der Kippachse abreißt und beim Herabfallen Personen verletzt.

Gelöst wird die Aufgabe durch eine Verbundsicherheitsglasscheibe mit einer Sollbruchstelle, enthaltend mindestens zwei vorgespannte Glasscheiben und eine polymere Zwischenschicht. Dabei enthält die polymere Zwischenschicht zwei Kunststoffe mit unterschiedlicher Reißfestigkeit (nach DIN 53504 v. 03/85, gemessen am Normstab S2 mit einer Prüfgeschwindigkeit von 100 mm/Minute bei 23 °C), unterschiedlicher Reißdehnung (nach DIN 53504 v. 03/85, gemessen am Normstab S2 mit einer Prüfgeschwindigkeit von 100 mm/Minute bei 23 °C) und unterschiedlicher Weiterreißfestigkeit (nach DIN 53356 v. 08/82, an einer 2 mm dicken Polymerfolie bei einer Reißgeschwindigkeit von 400 mm/Minute bei 23°C). Die Verbundglasscheibe enthält als Sollbruchstelle den Kunststoff mit der geringeren Reißfestigkeit, der geringeren Reißdehnung und der geringeren Weiterreißfestigkeit und in dem Bereich, der nicht die Sollbruchstelle darstellt, den Kunststoff mit der höheren Reißfestigkeit, der höheren Reißdehnung und der höheren Weiterreißfestigkeit. Weiterhin enthält die Verbundglasscheibe an einer Stelle oder an mehreren Stellen eine Aussparung, bevorzugt von kreisrunder Geometrie. Diese Aussparung (der Einschlagpunkt) enthält nicht die oben beschriebene Zwischenschicht, enthält dafür jedoch einen oder mehrere Körper eines Materials, dessen Härte höher ist als die des verwendeten Glases. Bevorzugt sind die harten Körper in einen weichen, plastischen Kunststoff eingebettet. Dieser "Einbettungskunststoff" kann ein ausgehärtetes Gießharz mit entsprechenden Eigenschaften und/oder eine polymere Folie, z.B. aus Polyisobutylen sein.

Als Glasscheiben können eingesetzt werden Flachgläser aus der Gruppe der Alkali-Kalk-Gläser, wie Kalknatronglas (z.B. nach DIN EN 572, 1 - 7), oder Borosilikatgläser. Die Glasscheiben sind vorgespannt oder teilvorgespannt. Die (Teil)Vorspannung kann thermisch (nach DIN EN 12150, 96/2 und/oder DIN EN 1863/1 2000/3 und/oder DIN EN 13024/1 98/1), oder chemisch erfolgen. Bevorzugt haben die Glasscheiben eine Dicke von 0,1 bis 12 mm und besonders bevorzugt von 0,5 bis 6 mm. Optimal ist eine Dicke von 1 bis 4 mm.

Im Notfall können beide Glasscheiben mit einem Schlag mittels eines stumpfen Körpers, z.B. Gummihammer, auf den Einschlagpunkt zerstört werden. Dies wird durch den oder die sich am Einschlagpunkt im VSG-Scheibenzwischenraum befindlichen Körper eines Materials, dessen Härte höher ist als die des Glases, erreicht. Bevorzugt haben die Körper eine Mohs'sche Härte von > 6, besonders bevorzugt von > 7. Bevorzugt bestehen die harten Körper aus Körnern oder Kugeln. Besonders bevorzugt sind Körner, die idealerweise scharfkantig sind. Eingesetzt werden können z.B. Körper aus Siliziumcarbid oder Korund. Dabei können die harten Körper mittels eines weichen, plastischen Materials (wie z.B. Polyisobutylen, auch Butyl genannt) fest zwischen den beiden außenliegenden Glasscheiben in den dafür vorgesehenen Raum eingebracht werden. Bevorzugt ist die Körpergröße so zu wählen, dass diese 0,1 bis 0,3 mm, besonders bevorzugt 0,1 mm kleiner ist als die Dicke der Gießharzschicht. Wird nun im Bereich des Einschlagpunktes impulsartig ein hoher Druck aufgebaut z. B. durch den Schlag mit einem stumpfen Körper, so werden die harten Körper durch die lokale Durchbiegung der Scheibe im Bereich des Hammerschlags mit einem ausreichend hohen Druck gegen beide Scheibenoberflächen gepresst. Dabei bildet sich unter dem oder den eindringenden Körpern ein Riss im Glas senkrecht zur Glasoberfläche. Erreicht die Rissspitze die Zugspannungszone des vorgespannten Glases, so bricht die gesamte Scheibe in bekannter Weise.

Anschließend ist die Öffnung des Notausstiegs an der Sollbruchstelle möglich. Um im Bereich der Sollbruchstelle eine Öffnung zu schaffen, ist ein Anriss erforderlich, der sich als linienförmiger Durchriss in Richtung der Längsausrichtung der Sollbruchstelle fortsetzt. Erst durch Aufbringen einer Kraft in der Nähe der Sollbruchstelle (z.B. durch einfaches Drücken mit der Hand) und Überschreitung der Weiterreißfestigkeit des Sollbruchstellenmaterials ist es möglich, diesen Riss zur Ausbreitung zu bringen und dadurch eine Öffnung des Notausstiegs zu erzielen.

Durch den Einsatz zweier Kunststoffe mit jeweils unterschiedlichen bruchmechanischen Eigenschaften und der so hergestellten Sollbruchstelle wird eine höhere Resttragfähigkeit der zerstörten VSG-Scheibe erreicht, als bei einer bekannten VSG-Scheibe, in der die Sollbruchstelle durch eine Verminderung der Haftung zwischen Zwischenschicht und Glas oder zwischen unterschiedlichen Bereichen der Zwischenschicht dargestellt wird. Die Resttragfähigkeit einer zerstörten VSG-Scheibe ist die Eigenschaft, einer definierten Belastung für eine bestimmte Zeit Stand zu halten, ohne eine Öffnung freizugeben. Dabei gibt es mehrere Möglichkeiten, die Sollbruchstelle auszubilden: So kann die Sollbruchstelle z.B. durch ein Gießharz ausgebildet werden, welches bevorzugt transparent ist; oder die Sollbruchstelle kann z.B. durch einen thermoplastischen, bei Raumtemperatur dauerplastischen Kunststoff ausgebildet werden. Die Sollbruchstelle kann auch so ausgeführt werden, dass die nicht die Sollbruchstelle darstellende polymere Zwischenschicht nicht durchgängig unterbrochen ist (in der Unterbrechung befindet sich der die Sollbruchstelle darstellende Kunststoff), sondern lediglich abschnittweise unterbrochen ist, wobei sich in den Unterbrechungen der die Sollbruchstelle darstellende Kunststoff befindet.

Durch die Variation und die gezielte Einstellung der bruchmechanischen Eigenschaften der zwei unterschiedlichen Kunststoffe (Kunststoff für den Bereich, der nicht die Sollbruchstelle darstellt und Kunststoff für die Sollbruchstelle) kann die erforderliche Resttragfähigkeit der zerstörten, aber noch nicht geöffneten Scheibe über einen sehr weiten Variationsbereich eingestellt werden.

Bevorzugt hat der Kunststoff, aus dem die Sollbruchstelle hergestellt wird, im Vergleich zu dem nicht die Sollbruchstelle bildenden Kunststoff neben der geringeren Reißfestigkeit, der geringeren Reißdehnung und geringeren Weiterreißfestigkeit auch eine geringere Härte und ist bei Raumtemperatur bevorzugt dauerplastisch.

Beispielhaft können für die bruchmechanischen Eigenschaften und die Härte des Kunststoffes der Sollbruchstelle folgende Werte angegeben werden (wobei die oben beschriebenen DIN zugrunde gelegt werden und die Shore-A Härte nach DIN 53505 an 6 mm dicken Probenkörpern bei 23 °C bestimmt wurde):

| | | |
|---|---|---|
| Reißfestigkeit. | 0,01 bis 2 MPa, | bevorzugt 0,1 bis 1,5 MPa; |
| Reißdehnung | 10 bis 450 %, | bevorzugt 10 bis 150 %; |
| 25 % Modul | maximal 0,2 MPa; | |
| 50 % Modul | maximal 0,3 MPa; | |
| 100 % Modul | maximal 0,4 MPa; | |
| Weiterreißfestigkeit, | maximal 3 N/mm, | bevorzugt max. 2 N/mm; |
| Shore-A Härte | 1 bis 40, | bevorzugt 5 bis 30. |

Beispielhaft können für die bruchmechanischen Eigenschaften und die Härte des Kunststoffes, welcher nicht die Sollbruchstelle darstellt, folgende Werte angegeben werden:

| | | |
|---|---|---|
| Reißfestigkeit | mindestens 4 MPa, | bevorzugt min. 10 MPa; |
| Reißdehnung | mindestens 200 %, | bevorzugt min. 300 %; |
| Weiterreißfestigkeit | mindestens 6 N/mm, | bevorzugt min. 15 N/mm; |
| Shore-A Härte | 30 bis 70, | bevorzugt 40 bis 60. |

Der Kunststoff zur Herstellung der Sollbruchstelle kann ein Gießharz enthalten, bzw. aus einem Gießharz bestehen. Dieses Gießharz kann gebildet werden aus einem linearen, nicht vernetztem oder teilvernetztem Polymer. Die Basis des Polymeren kann Polyurethan, Polyepoxyd, Polyester, Polysiloxan und/oder Polyacrylat sein. Bevorzugt wird das Gießharz auf Basis Polyacrylat eingesetzt. Das Polyacrylat besteht hauptsächlich aus reaktiven Acrylat- und Methacrylatmonomeren, die bei der Aushärtung ein Copolymer bilden. Das Gießharz zur Herstellung der Sollbruchstelle enthält weiterhin Initiatoren und kann darüber hinaus nichtreaktive Acrylat- und Methacrylat-Homo- und Copolymere, Füllstoffe, Weichmacher, klebrigmachende Zusätze und Stabilisatoren enthalten.

Alternativ kann der Kunststoff zur Herstellung der Sollbruchstelle ein thermoplastisches, bei Raumtemperatur dauerplastisches Material enthalten oder aus diesem bestehen. Dieses Material kann aus einem nicht vernetzen oder teilvernetzten Polymer gebildet werden. Die Basis des Polymeren kann z.B. durch Homo, Co- oder Terpolymere des Isobutylens oder Mischungen davon, sowie durch Copolymere von Acrylaten oder Methacrylaten oder Mischungen davon gebildet werden (Basispolymer).

Weitere Inhaltsstoffe des thermoplastischen Materials können sein thermoplastische Polymere, natürliche und synthetische Kautschuke, klebrigmachende Zusätze, Weichmacher, Haftvermittler, verstärkende und nichtverstärkende Füllstoffe, Stabilisatoren und andere Zusätze.

Homopolymere des Isobutylens sind Polyisobutylene, die kommerziell in verschiedenen Molekulargewichtsbereichen erhältlich sind. Beispiele für Polyisobutylen-Handelsnamen sind Oppanol (BASF AG), Vistanex (Exxon) oder Efrolen (Efremov). Der Zustand der Polyisobutylene reicht von flüssig über weichharzartig bis kautschukartig. Die Molekulargewichtsbereiche können wie folgt angegeben werden: Der Zahlenmittelwert der Molmasse beträgt 2.000 bis 1.000.000 g/mol, bevorzugt 24.000 bis 600.000 g/mol, und der Viskositätsmittelwert der Molmasse beträgt 5.000 bis 6.000.000 g/mol, bevorzugt 40.000 bis 4.000.000 g/mol.

Co- und Terpolymere des Isobutylens beinhalten als Co- und Termonomere 1,3-Diene, wie Isopren, Butadien, Chloropren oder β-Pinen, funktionelle Vinylverbindungen, wie Styrol, α-Methylstyrol, p-Methylstyrol oder Divinylbenzol, oder weitere Monomere. Ein Beispiel für ein Copolymer aus Isobutylen und Isopren ist Butylkautschuk mit geringen Anteilen an Isopren; kommerziell erhältlich sind z.B. diverse Butyl-Typen der Firmen Bayer AG, Exxon Chemical oder Kautschuk-Gesellschaft. Terpolymere des Isobutylens mit den Monomeren Isopren und Divinylbenzol ergeben teilvernetzte Butylkautschuk-Typen, die auch durch nachträgliche Vernetzung von Butylkautschuk erhältlich sind; kommerziell erhältlich sind z.B. LC Butyl von Exxon Chemical, Kalar von Hardman oder Polysar Butyl XL von Bayer AG. Die Homo-, Co- und Terpolymeren von Isobutylen können auch einer nachträglichen chemischen Modifizierung unterworfen werden; bekannt ist die Umsetzung von Butylkautschuk mit Halogenen (Chlor, Brom), die zu Chlor- bzw. Brombutylkautschuk führt. Ähnlich erfolgt die Umsetzung eines Copolymeren aus Isobutylen und p-Methylstyrol mit Brom zu dem Terpolymer aus Isobutylen, p-Methylstyrol und p-Bromomethylstyrol, das kommerziell erhältlich ist unter dem Handelsnamen EXXPRO von Exxon Chemical.

Homo- oder Copolymere von Acrylaten oder Methacrylaten (Poly(meth)acrylate) sind Polymere der Ester von Acryl- bzw. Methacrylsäure und können beispielsweise als Alkoholkomponente eine mit funktionellen Gruppen substituierte oder unsubstituierte Alkylgruppe, z.B. Methyl, Ethyl, Propyl, iso-Propyl, n-Butyl, iso-Butyl, tert-Butyl, Pentyl und Hexyl und deren Isomeren und höheren Homologen, 2-Ethylhexyl, Phenoxyethyl, Hydroxyethyl, 2-Hydroxypropyl, Caprolactonhydroxy-ethyl, Dimethylaminoethyl, umfassen. Eingeschlossen sind auch Polymere der Acrylsäure, der Methacrylsäure, von Amiden der genannten Säuren und von Acrylnitril. Es können auch teilvernetzte Poly(meth)acrylate, bei denen die Vernetzung über ein mehrfunktionelles Monomer mit z.B. Diethylenglycol oder Trimethylolpropan als Alkoholkomponente erfolgt, und Mischungen der Polyacrylate und der Polymethacrylate verwendet werden.

Beispiele für thermoplastische Polymere sind Polyolefine als Homo- und Copolymere, aufgebaut aus den Monomeren Ethylen, Propylen, n-Buten und deren höheren Homologen und Isomeren und aus funktionellen Vinylverbindungen wie Vinylacetat, Vinylchlorid, Styrol und α-Methylstyrol. Weitere Beispiele sind Polyamide, Polyimide, Polyacetale, Polycarbonate, Polyester und Polyurethane und Mischungen der erwähnten Polymere.

Natürliche und synthetische Kautschuke können ausgewählt werden aus der Gruppe der Homopolymeren von Dienen, der Gruppe der Co- und Terpolymeren von Dienen mit Olefinen und der Gruppe der Copolymeren von Olefinen. Beispiele sind Polybutadien, Polyisopren, Polychloropren, Styrol-Butadien-Kautschuk, Blockcopolymere mit Blöcken aus Styrol und Butadien oder Isopren, EthylenVinylacetat-Kautschuk, Ethylen-Propylen-Kautschuk und Ethylen-Propylen-DienKautschuk, beispielsweise mit Dicyclopentadien oder Ethylidennorbornen als DienKomponente. Die Kautschuke können auch in hydrierter Form und auch in Mischungen eingesetzt werden.

Klebrigmachende Zusätze können ausgewählt werden aus der Gruppe der natürlichen und synthetischen, auch nachträglich modifizierten Harze, die unter anderem Kohlenwasserstoffharze, Kolophonium und dessen Derivate, Polyterpene und deren Derivate, Cumaron-Indenharze und Phenolharze umfassen, und aus der Gruppe der Polybutene, der Polyisobutene und der abgebauten flüssigen Kautschuke (z.B. Butylkautschuk oder EPDM), die auch hydriert sein können. Es können auch Mischungen der aufgeführten klebrigmachenden Zusätze eingesetzt werden.

Beispiele für Weichmacher sind Ester der Phthalsäure (z.B. Di-2-ethylhexyl-, Diisodecyl-, Diisobutyl- oder Dicyclohexyl-phthalat), der Phosphorsäure (z.B. 2-Ethylhexyl-diphenyl-, Tri-(2-ethylhexyl)- oder Tricresyl-phosphat), der Trimellitsäure (z.B. Tri(2-ethylhexyl)- oder Triisononyl-trimellitat), der Citronensäure (z.B. Acetyltributyl- oder Acetyltriethyl-citrat) oder von Dicarbonsäuren (z.B. Di-2-ethylhexyl-adipat oder Dibutylsebacat). Es können auch Mischungen der Weichmacher eingesetzt werden.

Haftvermittelnde Substanzen können ausgewählt werden aus der Gruppe der Silane, die beispielsweise 3-Glycidyloxypropyl-trialkoxysilan, 3-Aminopropyl-trialkoxysilan, N-Aminoethyl-3-aminopropyl-trialkoxysilan, 3-Methacryloxypropyl-trialkoxysilan, Vinyltrialkoxysilan, iso-Butyl-trialkoxysilan, 3-Mercaptopropyl-trialkoxysilan umfassen können, aus der Gruppe der Kieselsäureester, z.B. Tetraalkylorthosilikate, und aus der Gruppe der Metallate, z.B. Tetraalkyltitanate oder Tetraalkylzirkonate, sowie Mischungen der aufgeführten haftvermittelnden Substanzen.

Stabilisatoren können Antioxidantien vom Typ der sterisch gehinderten Phenole (z.B. Tetrakis[methylen-3-(3,5-di-tert-butyl-4-hydroxyphenyl)- propionat]methan) oder vom Typ der schwefelbasierenden Antioxidantien wie Mercaptane, Sulfide, Polysulfide, Thioharnstoff, Mercaptale, Thioaldehyde, Thioketone usw. sein, oder UV-Schutzmittel vom Typ der Benzotriazole, Benzophenone oder vom HALS-Typ (Hindered Amine Light Stabilizer) oder Ozonschutzmittel sein. Diese können entweder alleine oder in Mischungen eingesetzt werden.

Beispiele für verstärkende und nichtverstärkende Füllstoffe sind pyrogene oder gefällte Kieselsäure, Kieselgel, gefällte oder gemahlene Kreide (auch oberflächenbehandelt), Calciumoxid, Ton, Kaolin, Talkum, Quarz, Zeolithe, Titandioxid, Glasfasern oder Aluminium- und Zinkpulver und Mischungen davon.

Wenn eine dunkle Farbe des die Sollbruchstelle bildenden Kunststoffes nicht als störend empfunden wird, können auch Ruß, Kohlenstofffasern oder Graphit eingesetzt werden.

Der Kunststoff zur Herstellung der polymeren Zwischenschicht, welche nicht die Sollbruchstelle darstellt, kann eine thermoplastische Klebefolie enthalten, bzw. aus dieser bestehen. Die Klebefolie kann Polyvinylacetale oder Polyurethane enthalten.

Der Kunststoff zur Herstellung der polymeren Zwischenschicht, welche nicht die Sollbruchstelle darstellt, kann auch ein Gießharz enthalten, bzw. aus einem Gießharz bestehen. Dieses Gießharz kann gebildet werden aus einem vernetzten oder teilvernetzten Polymer. Die Basis des Polymeren kann Polyurethan, Polyepoxyd, Polyester, Polysiloxan und/oder Polyacrylat sein. Bevorzugt wird das Gießharz auf Basis Polyacrylat eingesetzt. Das Polyacrylat besteht hauptsächlich aus reaktiven Acrylat- und Methacrylatmonomeren. Das Gießharz zur Herstellung der polymeren Zwischenschicht enthält weiterhin acrylat- und methacrylatfunktionelle Oligomere wie z.B. Urethanacrylate, Polyesteracrylate, sowie Haftvermittler und Initiatoren. Es kann weiterhin nichtreaktive Acrylat- und Methacrylat-Homo- und Copolymere, Füllstoffe, Weichmacher, klebrigmachende Zusätze und Stabilisatoren enthalten.

Die folgende qualitative Beschreibung der Gießharzinhaltsstoffe gilt sowohl für ein nicht die Sollbruchstelle darstellendes Gießharz als auch für ein die Sollbruchstelle darstellendes Gießharz.

Als reaktive Acrylat- und Methacrylatmonomere werden monofunktionelle und multifunktionelle, bevorzugt monofunktionelle, Ester der Acryl- bzw. Methacrylsäure eingesetzt. Die verwendeten Alkoholkomponenten der Ester können eine mit funktionellen Gruppen substituierte oder unsubstituierte Alkylgruppe, wie Methyl, Ethyl, Propyl, iso-Propyl, n-Butyl, tert-Butyl, Pentyl, Hexyl, deren Isomere und höhere Homologe, wie 2-Ethylhexyl, Phenoxyethyl, Hydroxyethyl, 2-Hydroxypropyl, Caprolactonhydroxyethyl, Polyethylenglycole mit einem Polymerisationsgrad von 5 bis 20, Polypropylenglycole mit einem Polymerisationsgrad von 5 bis 20 und Dimethylaminoethyl, umfassen. Als reaktive Monomere können auch die Acryl- und Methacrylsäure selbst, die Amide dieser Säuren und Acrylnitril eingesetzt werden. Es können auch Mischungen der reaktiven Acrylat- und Methacrylatmonomeren verwendet werden.

Beispiele für acrylat- und methacrylatfunktionelle Oligomere sind Epoxyacrylate, Urethanacrylate, Polyesteracrylate und Siliconacrylate. Die Oligomere können mono-oder höherfunktionell sein, vorzugsweise werden sie difunktionell eingesetzt. Es können auch Mischungen der Oligomere verwendet werden.

Epoxyacrylate basieren auf jeweils mit Acryl- oder Methacrylsäure terminiertem Bisphenol-A-diglycidylether, Bisphenol-F-diglycidylether, deren Oligomeren oder Novolakglycidylether.

Urethanacrylate sind aufgebaut aus Isocyanaten (z.B. Toluylen-, Tetramethylxylen-, Hexamethylen-, Isophoron-, Cyclohexylmethan-, Trimethylhexamethyl-, Xylen- oder Diphenylmethan-diisocyanate) und Polyolen und funktionalisiert mit Hydroxyacrylaten (z.B. Hydroxyethylacrylat) oder Hydroxymethacrylaten (z.B. Hydroxyethylmethaccylat).

Die Polyole können sein Polyesterpolyole oder Polyetherpolyole. Polyesterpolyole können hergestellt werden aus einer Dicarbonsäure (z.B. Adipinsäure, Phthalsäure oder deren Anhydride) und einem Diol (z.B. 1,6-Hexandiol, 1,2-Propandiol, Neopentylglycol, 1,2,3-Propantriol, Trimethylolpropan, Pentaerythrit oder Ethylenglycole, wie Diethylenglycol). Polyesterpolyole können auch durch Reaktion einer Hydroxycarbonsäure (z.B. ausgehend von Caprolacton) mit sich selbst gewonnen werden. Polyetherpolyole können aus Ethylenoxid oder Propylenoxid hergestellt werden.

Polyesteracrylate sind oben beschriebene Polyesterpolyole, die mit Acrylsäure oder mit Methacrylsäure funktionalisiert sind.

Die hier verwendeten an sich bekannten Siliconacrylate basieren auf mit Acrylat funktionalisierten Polydimethylsiloxanen unterschiedlichen Molekulargewichts.

Nichtreaktive Acrylat- und Methacrylat-Homo- und Copolymere sind Homo- und Copolymere der Acrylsäure, der Methacrylsäure und der oben beschriebenen Ester dieser Säuren. Der Klebstoff kann auch Mischungen der genannten Homo- und Copolymere enthalten. Das Gießharz kann auch ohne nichtreaktive Acrylat- oder Methacrylat-Homo- und Copolymere hergestellt werden.

Als Initiatoren können Fotoinitiatoren eingesetzt werden. Diese können ausgewählt werden aus der Gruppe der Benzoinether, der Benzilketale, der α-Dialkoxyacetophenone, der α-Hydroxyalkylphenone, der α-Aminoalkylphenone, der Acylphosphinoxide, der Benzophenone oder der Thioxantone oder aus Mischungen davon. Die Initiatoren haben die Aufgabe, die Aushärtung des Gießharzes einzuleiten.

Haftvermittler können ausgewählt werden aus der Gruppe der organofunktionellen Silane, wie 3-Glycidyloxypropyl-trialkoxysilan, 3-Aminopropyl-trialkoxysilan, N-Aminoethyl-3-aminopropyl-trialkoxysilan, 3-Methacryloxypropyl-trialkoxysilan, Vinyltrialkoxysilan, iso-Butyltrialkoxysilan, Mercaptopropyl-trialkoxysilan, und aus der Gruppe der Kieselsäureester, wie Tetraalkylorthosilikat. Das jeweilige Gießharz kann auch Mischungen der genannten Haftvermittler enthalten.

Füllstoffe können verstärkend und nichtverstärkend sein. Als Füllstoffe können pyrogene oder gefällte Kieselsäuren, die vorzugsweise hydrophil oder oberflächenbehandelt sind, und Cellulosederivate, wie Cellulose-acetate, - acetobutyrate, -acetopropionate, Methylcellulose und Hydroxypropylmethylcellulose, eingesetzt werden. Das jeweilige Gießharz kann auch Mischungen der genannten Füllstoffe enthalten.

Bespiele für Weichmacher sind Ester der Phthalsäure, wie Di-2-ethylhexyl-, Diisodecyl-, Diisobutyl-, Dicyclohexyl-, und Dimethyl-phthalat, Ester der Phosphorsäure, wie 2-Ethylhexyl-diphenyl-, Tri(2-ethylhexyl)- und Tricresyl-phosphat, Ester der Trimellitsäure, wie Tri(2-ethylhexyl)- und Triisononyl-trimellitat, Ester der Citronensäure, wie Acetyltributyl- und Acetyltriethyl-citrat, und Ester der Dicarbonsäuren, wie Di-2-ethylhexyladipat und Dibutylsebacat. Das jeweilige Gießharz kann auch Mischungen der genannten Weichmacher enthalten.

Klebrigmachende Zusätze können ausgewählt werden aus der Gruppe der natürlichen und synthetischen, auch nachträglich modifizierten, Harze. Als Harze dienen Kohlenwasserstoffharze, Kolophonium und dessen Derivate, Polyterpene und deren Derivate, Cumaron-Indenharze, Phenolharze, Polybutene, hydrierte Polybutene, Polyisobutene und hydrierte Polyisobutene. Das jeweilige Gießharz kann auch Mischungen der genannten klebrigmachenden Zusätze enthalten.

Stabilisatoren können Antioxidantien, wie Phenole (z.B. 4-Methoxyphenol) oder sterisch gehinderte Phenole (z.B. 2,6-Di-tert.-butyl-4-methylphenol) oder Mischungen verschiedener Antioxidantien sein.

Die Gießharze werden hergestellt durch vermischen der o.g. Komponenten in einem gewöhnlichen Mischaggregat.

Falls die Sollbruchstelle durch ein Gießharz dargestellt wird, können bevorzugte Einsatzmengen der verwendeten Stoffe für das Gießharz wie folgt angegeben werden (Zahlenangaben in Gew.-%):

| | |
|---|---|
| a) reaktive Acrylat- oder Methacrylatmonomere | 50 - 99 |
| b) acrylat- oder methacrylatfunktionelle Oligomere | 0 - 5 |
| c) nichtreaktive Acrylat- oder Methacrylat-Homo-und -Copolymere | 0 - 5 |
| d) Initiatoren | 0,1 - 2 |
| e) Haftvermittler | 0 - 3 |
| f) Füllstoffe | 0 - 10 |
| g) Weichmacher | 0 - 40 |
| h) klebrigmachende Zusätze | 0 - 5 |
| i) Stabilisatoren | 0 - 2 |

Besonders bevorzugte Einsatzmengen der verwendeten Stoffe für das Gießharz der Sollbruchstelle sind:

| | |
|---|---|
| a) reaktive Acrylat- oder Methacrylatmonomere | 70 - 90 |
| b) acrylat- oder methacrylatfunktionelle Oligomere | 0 - 5 |
| c) nichtreaktive Acrylat- oder Methacrylat-Homo-und -Copolymere | 0 - 5 |
| d) Initiatoren | 0,1 - 1 |
| e) Haftvermittler | 0 - 3 |
| f) Füllstoffe | 0 - 10 |
| g) Weichmacher | 10 - 20 |
| h) klebrigmachende Zusätze | 0 - 5 |
| i) Stabilisatoren | 0 - 2 |

Falls die Sollbruchstelle durch ein thermoplastisches, bei Raumtemperatur dauerplastisches Material dargestellt wird, können bevorzugte Einsatzmengen der verwendeten Stoffe wie folgt angegeben werden (Zahlenangaben in Gew.-%):

| | |
|---|---|
| a) Basispolymer | 30 - 100 |
| b) thermoplastische Polymere | 0 - 50 |
| c) natürliche und synthetische Kautschuke | 0 - 50 |
| d) klebrigmachende Zusätze | 0 - 30 |
| e) Weichmacher | 0 - 50 |
| f) Haftvermittler | 0 - 5 |
| g) Stabilisatoren | 0 - 5 |
| h) verstärkende und nichtverstärkende Füllstoffe | 0 - 70 |

Besonders bevorzugt können folgende Einsatzmengen angegeben werden:

| | |
|---|---|
| a) Basispolymer | 40 - 100 |
| b) thermoplastische Polymere | 0 - 30 |
| c) natürliche und synthetische Kautschuke | 0 - 30 |
| d) klebrigmachende Zusätze | 0 - 25 |
| e) Weichmacher | 0 - 30 |
| f) Haftvermittler | 0 - 3 |
| g) Stabilisatoren | 0 - 3 |
| h) verstärkende und nichtverstärkende Füllstoffe | 0 - 60 |

Bevorzugte Einsatzmengen der verwendeten Stoffe für das nicht die Sollbruchstelle bildende Gießharz der Zwischenschicht können wie folgt angegeben werden:

| | |
|---|---|
| a) reaktive Acrylat- oder Methacrylatmonomere | 40 - 89 |
| b) acrylat- oder methacrylatfunktionelle Oligomere | 10 - 50 |
| c) d) nichtreaktive Acrylat- oder Methacrylat-Homo-und -Copolymere Initiatoren | 0 - 10 0,1 - 2 |
| e) Haftvermittler | 0,5 - 3 |
| f) Füllstoffe | 0 - 5 |
| g) Weichmacher | 0 - 10 |
| h) klebrigmachende Zusätze | 0 - 5 |
| i) Stabilisatoren | 0 - 2 |

Besonders bevorzugte Einsatzmengen der verwendeten Stoffe für das nicht die Sollbruchstelle bildende Gießharz der Zwischenschicht sind:

| | |
|---|---|
| a) reaktive Acrylat- oder Methacrylatmonomere | 60 - 80 |
| b) acrylat- oder methacrylatfunktionelle Oligomere | 20 - 40 |
| c) nichtreaktive Acrylat- oder Methacrylat-Homo-und -Copolymere | 0 - 5 |
| d) Initiatoren | 0,1 - 1 |
| e) Haftvermittler | 0,5 - 2 |
| f) Füllstoffe | 0 - 5 |
| g) Weichmacher | 0 - 10 |
| h) klebrigmachende Zusätze | 0 - 5 |
| i) Stabilisatoren | 0 - 2 |

Die Eigenschaften der Gießharze richten sich nach der Auswahl der verwendeten Stoffe und deren Einsatzmengen. Die bruchmechanischen Eigenschaften der Sollbruchstelle und der polymeren Zwischenschicht werden auf die beschriebenen Bereiche eingestellt, indem der Anteil der hartmachenden Comonomeren oder die Vernetzungsdichte geändert wird. So führt nicht automatisch jede Kombination der Einsatzstoffe gemäß den oben angegebenen bevorzugten Einsatzmengen zu den gewünschten Eigenschaften der Gießharze. Rezepturen für die Herstellung der Gießharze sind in den Ausführungsbeispielen angegeben. Zur Ausarbeitung weiterer Rezepturen sind gegebenenfalls Vorversuche unter Beachtung der folgenden Zusammenhänge durchzuführen.

Mit zunehmendem Gehalt hartmachender Comonomere erhöhen sich im angegebenen Härtebereich die Reißfestigkeit, Reißdehnung und Weiterreißfestigkeit. Zur Einstellung dieser Eigenschaften wird bevorzugt Acrylsäure als Comonomeres verwendet. Ebenso können diese Eigenschaften im angegebenen Härtebereich über die Vernetzung mit Hilfe von acrylat- und methacrylatfunktionellen Oligomeren eingestellt werden. Mit zunehmender Funktionalität und abnehmender mittlerer Molekulargewichtsverteilung der acrylat- und methacrylatfunktionellen Oligomeren und zunehmendem Gehalt dieser Stoffe im Gießharz steigt die Reißfestigkeit, Reißdehnung und Weiterreißfestigkeit.

Bevorzugt sind das Gießharz zur Herstellung der Sollbruchstelle sowie das Gießharz zur Herstellung der polymeren Zwischenschicht im ausgehärteten Zustand farblos und transparent.

Ein Verfahren zur Herstellung einer Verbundsicherheitsglasscheibe mit Sollbruchstelle wird nachfolgend beispielhaft näher beschrieben:
Falls die Sollbruchstelle durch ein Gießharz dargestellt werden soll, wird in einem vorbereitenden Verfahrensschritt aus dem Gießharz, welches später die Sollbruchstelle darstellt, eine Folie hergestellt. Hierzu werden zwei 4 mm dicke Floatglastafeln mit Hilfe von wenigen Tropfen Wasser als Adhäsionsmittel mit einer ca. 100 µm dicken Hilfsfolie, z.B. einer Polyesterfolie, beschichtet. Diese Hilfsfolie dient dazu, dass das Gießharz nicht an den Glastafeln haftet. Es ist eine solche Folie auszuwählen, an der das ausgehärtete Gießharz (die spätere Sollbruchstelle) nicht haftet. Auf die erste der beiden mit der Hilfsfolie beschichteten Glastafeln wird unmittelbar im Randbereich eine Randabdichtung aufgebracht. Hierzu kann ein doppelseitig klebendes Band von z.B. der Fa. 3M (Typ 4915 oder 4918) oder auch eine Naftotherm-Butylschnur mit einem Kern aus z.B. Polypropylen von der Fa. Chemetall GmbH (Typ 3215 oder 3220) verwendet werden. Nach Aufbringen der Randabdichtung, welche eine ca. 50 mm breite Einfüllöffnung für das Gießharz enthält, auf die erste Glastafel wird die zweite mit der Hilfsfolie beschichtete Glastafel deckungsgleich abgelegt. Die beiden Glastafeln werden mit Hilfe von Maulbettklammern verpresst, so dass ein abgedichteter Raum von je nach verwendeter Randabdichtung ca. 1,5 bis 2,0 mm Dicke entsteht. Anschließend wird das Gießharz eingefüllt, die Einfüllöffnung nach dem Abkippen und Entlüften des Glastafelzwischenraumes verschlossen und das Gießharz durch Bestrahlung der waagerecht liegenden Sandwichanordnung unter einem UV-Himmel (z.B. der Firma Torgauer Maschinenbau mit Blacklight blue Röhren von Philips Typ TLD 08) innerhalb von 20 Minuten zur Aushärtung gebracht. Nach der Aushärtung werden die beiden Glastafeln von den Hilfsfolien getrennt, das zu einer Folie ausgehärtete Gießharz (die spätere Sollbruchstelle) entnommen und z.B. mit Hilfe einer Schlagschere in Streifen von ca. 10 mm Breite und einer von der Geometrie der später herzustellenden VSG-Scheibe bestimmten Länge geschnitten.

Zur Herstellung der erfindungsgemäßen VSG-Scheibe wird eine erste vorgespannte Glastafel in bekannter Weise gereinigt. Anschließend wird auf der Glastafel eine Randabdichtung aufgebracht (incl. einer Lücke für die Einfüllöffnung). Als Randabdichtung kann ein thermoplastisch applizierbares Material auf Basis Polyisobutylen der Fa. Chemetall GmbH (Typ Naftotherm TPS) oder eine Naftotherm-Butylschnur der Fa. Chemetall GmbH (Typ 3215 oder 3220) oder ein doppelseitig klebendes Band von z.B. der Fa. 3M (Typ 4915 oder 4918) verwendet werden.

Wird die Sollbruchstelle durch ein Gießharz dargestellt, werden nun die oben beschriebenen ausgehärteten Sollbruchstellen-Gießharzstreifen an der vorgesehenen Sollbruchstelle auf die Glastafel gelegt. Dabei haften die Gießharzstreifen durch ihre Eigenklebrigkeit an der Glastafel.

Wird die Sollbruchstelle durch einen thermoplastischen Kunststoff dargestellt, kann dieser mit Hilfe einer beheizten Kartuschenpistole oder mit Hilfe eines Roboters und einer entsprechenden Verarbeitungsanlage, erhältlich z.B. von der Fa. Lenhardt Maschinenbau auf die Glastafel aufgebracht werden. Die Sollbruchstelle kann auch in Form einer aus diesem Kunststoff zuvor hergestellten Rundschnur entsprechender Dicke auf die Glastafel aufgebracht werden.

Bevorzugt hat die Sollbruchstelle die Form von drei Seiten eines Rechteckes, welches sich innerhalb der Glastafelfläche befindet. Weiterhin werden am gewünschten Einschlagpunkt der oder die harten Körper plaziert. Bevorzugt geschieht dies mit einer Einbettung in Polyisobutylen, deren Herstellung weiter unten beschrieben wird. Anschließend wird die zweite vorgespannte Glastafel deckungsgleich auf die erste abgelegt. In bekannter Weise werden die Glastafeln verpresst. Es entsteht ein abgedichteter Raum, in welchen das Gießharz, welches die polymere Zwischenschicht außerhalb der Sollbruchstelle bildet, luftblasenfrei eingefüllt wird. Dazu steht die Sandwichanordnung beim Einfüllen des Gießharzes bevorzugt ca. 30° geneigt, und die Füllung kann von unten oder von oben mit Hilfe einer Einfülldüse erfolgen. Zum Entlüften des Glastafelzwischenraumes wird die Sandwichanordnung in die Horizontale gelegt und die Einfüllöffnung in bekannter Weise mit z.B. Hotmelt von der Fa. Chemetall GmbH (Typ Heißschmelzkleber 21), oder mit dem Randabdichtungsmaterial selbst, verschlossen. Anschließend wird die Sandwichanordnung unter einen UV-Himmel (z.B. von der Fa. Torgauer Maschinenbau mit Blacklight-blue-Röhren) gelegt und das Gießharz innerhalb von 20 Minuten ausgehärtet.

Anstelle des Gießharzes für die polymere Zwischenschicht außerhalb der Sollbruchstelle kann auch eine bei der Herstellung von Verbundglas übliche polymere, transparente Folie, z.B. aus Polyvinylbutyral, verwendet werden. Dazu werden aus der Folie die Bereiche, in denen sich die Sollbruchstelle befinden soll, ausgeschnitten und in diese Bereiche die oben beschriebenen ausgehärteten Sollbruchstellen-Gießharzstreifen eingefügt.

Die entstandene VSG-Scheibe mit Notausstiegssystem kann als einzelne VSG-Scheibe weiterverarbeitet werden. Auch kann die entstandene VSG-Scheibe mit Sollbruchstelle in gewöhnlichem Mehrscheibenisolierglas weiterverarbeitet werden, wobei eine oder mehrere Scheiben des Mehrscheibenisolierglases aus der erfindungsgemäßen VSG-Scheibe mit Sollbruchstelle bestehen können.

Verwendung finden kann die erfindungsgemäße VSG-Scheibe in Gebäuden sowie Schienen-, Straßen- und Wasserfahrzeugen.

Die Einbettung der harten Körper in Polyisobutylen (zur Verwendung als Einschlagpunkt) kann folgendermaßen hergestellt werden:
Aus einem Butyldichtstoff (Dichtstoff, enthaltend ein Homo-, Co- oder Terpolymer des Isobutylens oder Mischungen davon, oder ein Copolymer von Acrylaten oder Methacrylaten oder Mischungen davon, evtl. zusammen mit anderen üblichen Zusatzstoffen; z.B. Naftotherm TPS der Chemetall GmbH) wird eine dünne Folie gefertigt. Dies kann in einer Plattenpresse erfolgen, indem ein Würfel des Dichtstoffes mit ca. 10 mm Kantenlänge auf eine Dicke von 0,8 mm gepresst wird. Dies geschieht bevorzugt mittels zweier Pressplatten aus Metall und einem Abstandhalter aus Metall von 0,8 mm Dicke. Aus der so hergestellten Folie werden runde Folienteile, sogenannte Pads, ausgestanzt (Durchmesser ca. 30 mm). Auf ein waagerecht liegendes Pad werden dann ein oder mehrere harte Körper, z.B. SiC-Körner, in die Mitte des Pad plaziert. In Versuchen hat sich eine Anzahl von 10 bis 30 SiC-Körner als sehr gut erwiesen. Als SiC-Körner können z.B. SiC-Körner der ESK-SIC GmbH Qualität F14 (1,70 mm 20 %, 1,40 mm 45 %, 1,18 mm 70 %) oder Qualität F16 (1,40 mm 20 %, 1,18 mm 45 %, 1,00 mm 70 %) eingesetzt werden.

Empfehlenswert ist eine Siebung der Körner, um Korngrößen, die über der maximalen Korngröße liegen (diese richtet sich nach dem Abstand der beiden Glastafeln), auszuschließen. Anschließend wird ein zweites Pad deckungsgleich auf das erste über den harten Körpern abgelegt. Dieses Gebilde wird zwischen zwei Metallplatten auf eine Dicke von ca. 1,6 mm verpresst. Aus diesem Pressling wird die als Einschlagpunkt einsetzbare Körpereinbettung in Polyisobutylen mit einem Durchmesser von ca. 30 mm ausgestanzt. Aus Gründen der Eigenklebrigkeit des Butyldichtstoffes erfolgt das Handling vorzugsweise mit Hilfe von Silikonpapier.

Die Herstellung der Gießharze für die Sollbruchstelle und für die nicht die Sollbruchstelle darstellende polymere Zwischenschicht, die Herstellung eines die Sollbruchstelle darstellenden thermoplastischen, bei Raumtemperatur dauerplastischen Kunststoffes, sowie die Bestimmung der Eigenschaften der Gießharze sind in den folgenden Ausführungsbeispielen näher erläutert. (%-Angaben sind, wenn nichts anderes vermerkt, Gew.-% Angaben.)

### Beispiel 1: Herstellung eines Gießharzes für die Sollbruchstelle

In einer 2000 ml - Polyethylen-Weithalsflasche wurden als reaktive Acrylat- und Methacrylat-Monomere 750 g (50 %) n-Butylacrylat und 745,5 g (49,7 %) Polypropylenglykolmonoacrylat (Bisomer PPA6 von der Firma International Speciality Chemicals) über einen Zeitraum von 10 Minuten mit Hilfe eines Magnetrührstabes und Magnetrührmotor homogenisiert. Danach wurde als Fotoinitiator 4,5 g (0,3 %) 1-Hydroxy-cyclohexyl-phenyl-keton (Irgacure 184 von der Firma Ciba-Geigy) zugegeben und innerhalb 10 Minuten bei intensivem Rühren (Magnetrührer) gelöst.

### Beispiel 2: Herstellung eines Gießharzes für die nicht die Sollbruchstelle bildende polymere Zwischenschicht

In einem 2000 ml - Becherglas wurden als reaktive Acrylat- und Methacrylat-Monomere 888 g (59,2 %) 2-Ethylhexylacrylat, 75 g (5 %) Methylmethacrylat und 180 g (12 %) Acrylsäure und als Haftvermittler 22,5 g (1,5 %) 3-Glycidyloxypropyltrimethoxysilan (Dynasilan GLYMO der Fa. Sivento) vorgelegt und über einen Zeitraum von 5 Minuten mit einem Propellerrührer vermischt. Danach wurde als acrylatfunktionelles Oligomer 330 g (22 %) eines aliphatischen Urethanacrylates (Craynor CN 965 der Firma Cray Valley ), welches vor der Zugabe auf ca. 60 °C erwärmt wurde, innerhalb von 15 Minuten eingemischt. Zuletzt wurde als Fotoinitiator 4,5 g (0,3%) 1-Hydroxy-cyclohexyl-phenyl-keton (Irgacure 184 der Firma Ciba-Geigy) zugegeben und diese Mischung 10 Minuten homogenisiert.

### Beispiel 3: Herstellung einer Rundschnur aus thermoplastisch applizierbarem, dauerplastischem Material auf Basis Polyisobutylen zur Verwendung als Sollbruchstelle

500 g eines kommerziell erhältlichen Randabdichtungsmaterials auf Basis Polyisobutylen (Naftotherm BU-TPS der Firma Chemetall GmbH) wurden in einem Messextruder (Fa. Göttfert) bei ca. 130 °C durch eine 4,5 mm Runddüse zu einer Rundschnur mit ca. 4,8 mm Durchmesser ausgetragen. Die Dickendifferenz Düse und Schnur ist durch eine Strangaufweitung bei der Extrusion bedingt. Die so hergestellte Rundschnur wurde zwischen Silikonpapier aufgerollt und bis zur Verwendung trocken gelagert.

Probenkörper für die Messung der bruchmechanischen Eigenschaften (siehe Beispiel 4) wurden durch entsprechendes Verpressen von Naftotherm BU-TPS hergestellt.

### Beispiel 4: Vergleich der bruchmechanischen Eigenschaften und der Härte der Sollbruchstelle und der polymeren Zwischenschicht

Zur Bestimmung der Eigenschaften wurden die Gießharze aus Beispiel 1 und Beispiel 2 zwischen zwei Polyesterträgerfolien so zur Aushärtung gebracht, dass eine ca. 2 mm dicke Folie entstand. Die Trägerfolien wurden anschließend vom jeweils ausgehärteten Gießharz (nun vorliegend als Polymerfolien) entfernt und die mechanischen Eigenschaften der Folien bestimmt. Weiterhin wurden die mechanischen Eigenschaften der thermoplastischen Probekörper aus Beispiel 3 bestimmt.

| | Sollbruchstelle (Beispiel 1) | Zwischenschicht (Beispiel 2) | Sollbruchstelle (Beispiel 3) |
|---|---|---|---|
| Shore-A Härte [1] | 25 | 48 | 10 |
| Reißfestigkeit [MPa] | 0,17 | 9 | 0,02 |
| 25% Modul [MPa] | - | 0,4 | 0,12 |
| 50% Modul [MPa] | - | 0,6 | 0,11 |
| 100% Modul [MPa] | - | 0,8 | 0,08 |
| Reißdehnung [%] | 20 | 350 | 360 |
| Weiterreißfestigkeit [N/mm] | 0,2 | 12 | 0,01 |

Die Bestimmung der Shore-A Härte erfolgte nach DIN 53505 an 6 mm dicken Probenkörpern bei 23 °C. Die Bestimmung der Reißfestigkeit erfolgte nach DIN 53504 v. 03/85, gemessen am Normstab S2 mit einer Prüfgeschwindigkeit von 100 mm/Minute bei 23 °C. Die Bestimmung der Reißdehnung erfolgte nach DIN 53504 v. 03/85, gemessen am Normstab S2 mit einer Prüfgeschwindigkeit von 100 mm/Minute bei 23 °C. Die Bestimmung der Weiterreißfestigkeit erfolgte nach DIN 53356 v. 08/82, an einer 2 mm dicken Polymerfolie bei einer Reißgeschwindigkeit von 400 mm/Minute bei 23°C.

### Beispiel 5: Vergleich der Farbe Sollbruchstelle / polymere Zwischenschicht

Die Messung der Farbe erfolgte mit einem Spekralphotometer der Firma Perkin Elmer Typ Lambda 12. Es wurde zunächst das Transmissionsspektrum mit dem Programm UV-WINLAB aufgenommen und die Farbauswertung nach dem Dreibereichsverfahren erfolgte mit der PECOL - Software nach CIELAB. Ausgewertet wurde mit der Normlichtart D65 bei einem 10° Normalbeobachter. Gemessen wurde ein Aufbau von 4 mm Floatglas / 2 mm ausgehärtetes Gießharz / 4 mm Floatglas. Als Sollbruchstellenmaterial wurde ein Gießharz nach Beispiel 1 verwendet, für die nicht die Sollbruchstelle darstellende polymere Zwischenschicht ein Gießharz nach Beispiel 2. Im Referenzstrahl befand sich für die Messung keine Probe; d.h. Referenz Luft. Es ergaben sich folgende Werte:

| | Sollbruchstelle | polymere Zwischenschicht |
|---|---|---|
| L* | 95,22 | 95,30 |
| a* | -1,85 | -1,89 |
| b* | 0,30 | 0,43 |

Die Messwerte zeigen, dass die Sollbruchstelle und die polymere Zwischenschicht nahezu die gleiche Farbe aufweisen. Mit dem Auge ließ sich kein Unterschied erkennen.

Die Messung der Farbe in Transmission ist an dem Sollbruchstellenmaterial aus Beispiel 3 nicht möglich, da dieses Material schwarz pigmentiert und damit undurchsichtig ist.

### Beispiel 6: Vergleich der Transmissionseigenschaften Sollbruchstelle / polymere Zwischenschicht

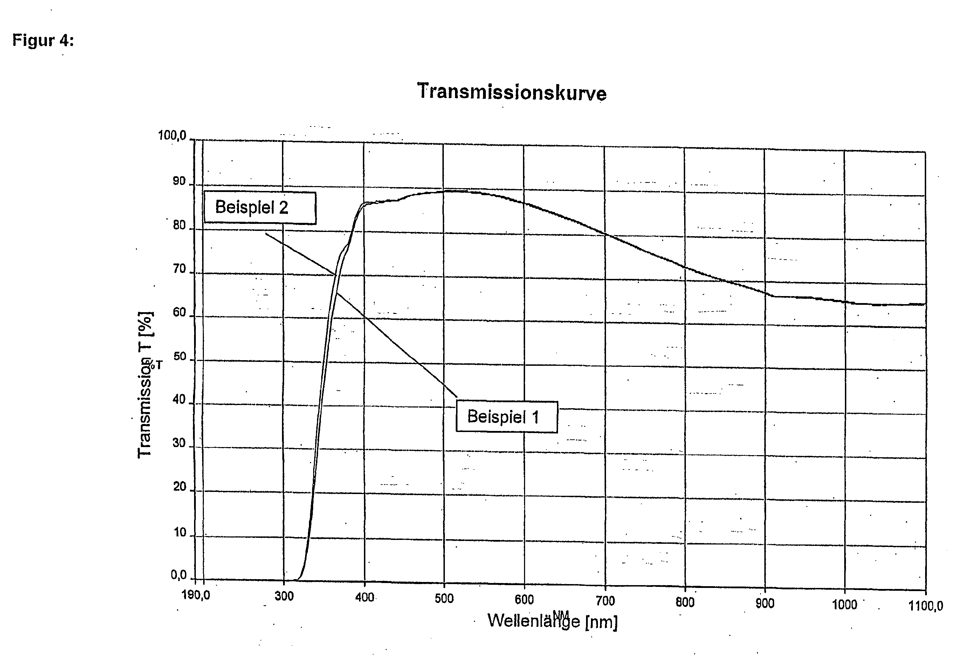

Von der Sollbruchstelle (aus Beispiel 1) und der nicht die Sollbruchstelle darstellenden polymeren Zwischenschicht (aus Beispiel 2) wurden Transmissionskurven aufgenommen. Dies erfolgte analog Beispiel 5. Die Kurvenvergleich ist in Figur 4 dargestellt.

Zu erkennen ist, dass beide Proben ein nahezu gleiches Transmissionsverhalten zeigen. Dem Augenschein nach zeigte sich ein mit den Gießharzen aus den Beispielen 1 und 2 hergestellte VSG-Scheibe in der Durchsicht farblos und transparent.

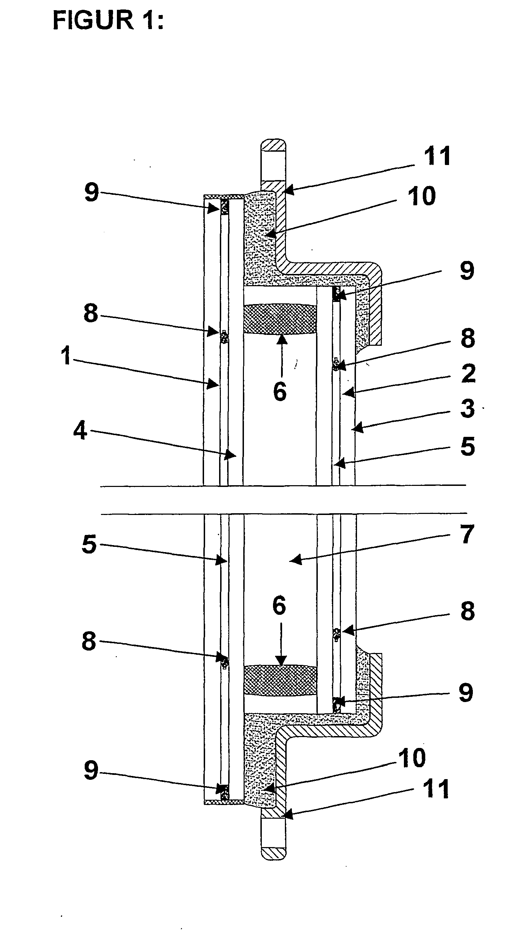

### Bezugszeichenliste zu Figur 1:

Dargestellt ist eine Mehrscheibenisolierglaseinheit bestehend aus zwei VSG-Scheiben mit Sollbruchstelle vor dem Zerstören, Schnittzeichnung
- 1 -: Innenseite der äußeren Glasscheibe
- 2 -: Innenseite der inneren (raumseitigen) Glasscheibe
- 3 -: Glasscheibe
- 4 -: Glasscheibe
- 5 -: polymere Zwischenschicht
- 6 -: Abstandhalter der Mehrscheibenisolierglaseinheit
- 7 -: Scheibenzwischenraum
- 8 -: Sollbruchstelle
- 9 -: Gießharzscheibenrandabdichtung
- 10 -: Verglasungsdichtstoff
- 11 -: Rahmen
- 12 -: unbedeutend
- 13 -: unbedeutend
- 14 -: unbedeutend

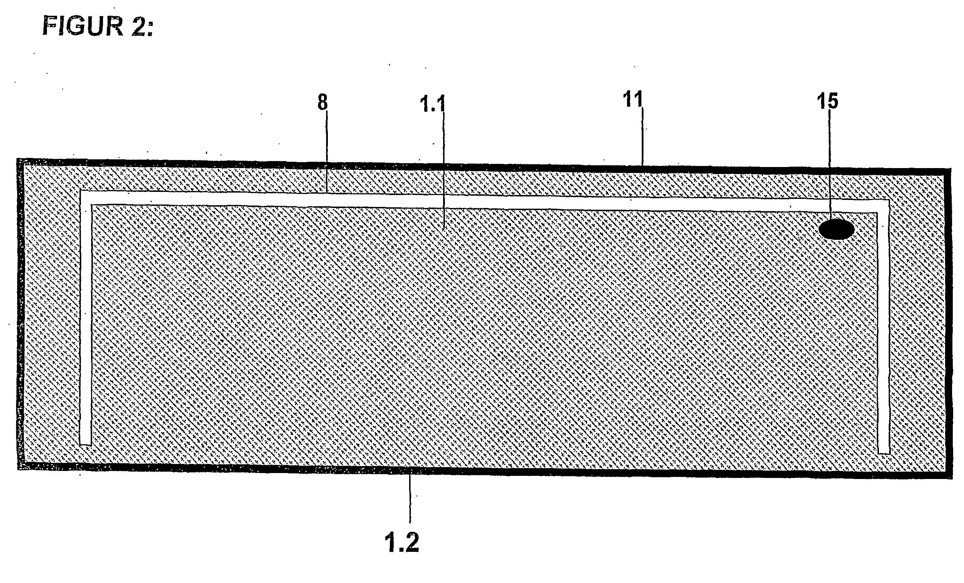

### Bezugszeichenliste zu Figur 2:

Dargestellt ist eine VSG-Scheibe mit Sollbruchstelle vor dem Zerstören, Draufsicht
- 1.1 -: Verbundsicherkeitsglasscheibe
- 1.2 -: Rahmen unten beim Einbau
- 8: - Sollbruchstelle
- 11 -: Rahmen oben beim Einbau
- 15 -: Einschlagpunkt

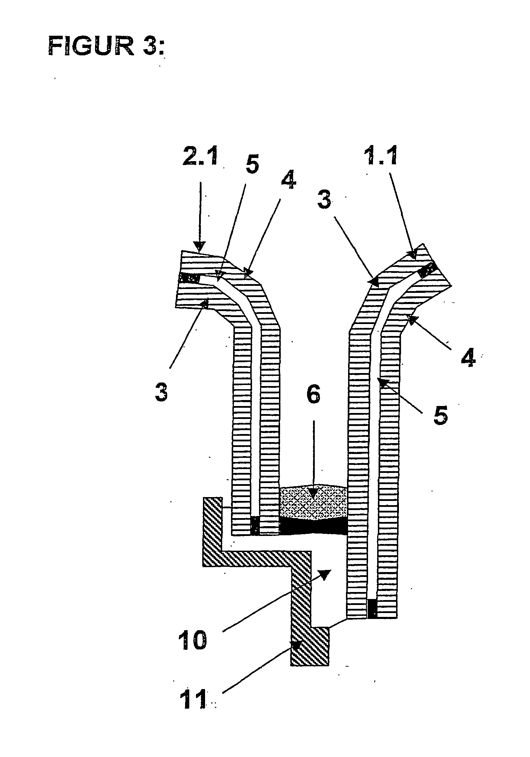

### Bezugszeichenliste zu Figur 3:

Dargestellt ist eine Mehrscheibenisolierglaseinheit bestehend aus zwei VSG-Scheiben mit Sollbruchstelle nach dem Zerstören, Schnittzeichnung
- 1.1 -: Glasscheibe zur Innenseite des Luftzwischenraumes
- 2.1 -: Oberfläche der zum Luftzwischenraum angeordneten inneren Glasscheibe
- 3 -: Glasscheibe
- 4 -: Glasscheibe
- 5 -: polymere Zwischenschicht
- 6 -: Abstandhalter des Mehrscheibenisolierglases
- 10 -: Verglasungsdichtstoff
- 11 -: Rahmen

## Patentansprüche

1. Verbundsicherheitsglasscheibe mit einer Sollbruchstelle, enthaltend mindestens zwei vorgespannte Glasscheiben und eine polymere Zwischenschicht, **dadurch gekennzeichnet, dass**
die polymere Zwischenschicht zwei Kunststoffe unterschiedlicher Reißfestigkeit (nach DIN 53504 v. 03/85, gemessen am Normstab S2 mit einer Prüfgeschwindigkeit von 100 mm/Minute bei 23 °C), unterschiedlicher Reißdehnung (nach DIN 53504 v. 03/85, gemessen am Normstab S2 mit einer Prüfgeschwindigkeit von 100 mm/Minute bei 23 °C) und unterschiedlicher Weiterreißfestigkeit (nach DIN 53356 v. 08/82, an einer 2 mm dicken Polymerfolie bei einer Reißgeschwindigkeit von 400 mm/Minute bei 23°C) enthält,
wobei die Verbundglasscheibe an der Sollbruchstelle den Kunststoff mit der geringeren Reißfestigkeit, der geringeren Reißdehnung und der geringeren Weiterreißfestigkeit enthält, und die Verbundglasscheibe in dem Bereich, der nicht die Sollbruchstelle darstellt, den Kunststoff mit der höheren Reißfestigkeit, der höheren Reißdehnung und der höheren Weiterreißfestigkeit enthält und
die Verbundglasscheibe in der Zwischenschicht an mindestens einer Stelle (am Einschlagpunkt) einen oder mehrere Körper eines Materials enthält, dessen Härte höher ist als die des verwendeten Glases.

2. Verbundsicherheitsglasscheibe mit einer Sollbruchstelle nach Anspruch 1, **dadurch gekennzeichnet, dass** als Glasscheiben Flachgläser aus der Gruppe der Alkali-Kalk-Gläser, wie Kalknatronglas, oder Borosilikatgläser ausgewählt sind.

3. Verbundsicherheitsglasscheibe mit einer Sollbruchstelle nach Anspruch 1 oder 2, **dadurch gekennzeichnet, dass** die Mohs'sche Härte des oder der harten Körper am Einschlagpunkt > 6 ist.

4. Verbundsicherheitsglasscheibe mit einer Sollbruchstelle nach Anspruch 3, **dadurch gekennzeichnet, dass** die Mohs'sche Härte des oder der harten Körper am Einschlagpunkt > 7 ist.

5. Verbundsicherheitsglasscheibe mit einer Sollbruchstelle nach einem oder mehreren der Ansprüche 1 bis 4, **dadurch gekennzeichnet, dass** die harten Körper aus Körnern oder Kugeln bestehen.

6. Verbundsicherheitsglasscheibe mit einer Sollbruchstelle nach einem oder mehreren der Ansprüche 1 bis 5, **dadurch gekennzeichnet, dass** der oder die harten Körper am Einschlagpunkt aus Siliziumcarbid und/oder aus Korund bestehen.

7. Verbundsicherheitsglasscheibe mit einer Sollbruchstelle nach einem oder mehreren der Ansprüche 1 bis 6, **dadurch gekennzeichnet, dass** die harten Körper eine Größe aufweisen, die 0,1 bis 0,3 mm kleiner ist als die Dicke der Kunststoffzwischenschicht.

8. Verbundsicherheitsglasscheibe mit einer Sollbruchstelle nach einem oder mehreren der Ansprüche 1 bis 7, **dadurch gekennzeichnet, dass** die harten Körper in Polyisobutylen eingebettet sind.

9. Verbundsicherheitsglasscheibe mit einer Sollbruchstelle nach einem oder mehreren der Ansprüche 1 bis 8, **dadurch gekennzeichnet, dass** der Kunststoff der Sollbruchstelle folgende bruchmechanischen Eigenschaften aufweist: Reißfestigkeit 0,01 bis 2 MPa, Reißdehnung 10 bis 450 %, Weiterreißfestigkeit maximal 3 N/mm, Shore-A Härte (nach DIN 53505 an 6 mm dicken Probenkörpern bei 23 °C bestimmt) 1 bis 40.

10. Verbundsicherheitsglasscheibe mit einer Sollbruchstelle nach einem oder mehreren der Ansprüche 1 bis 9, **dadurch gekennzeichnet, dass** der Kunststoff der nicht die Sollbruchstelle bildenden polymeren Zwischenschicht folgende bruchmechanischen Eigenschaften aufweist: Reißfestigkeit mindestens 4 MPa, Reißdehnung mindestens 200 %, Weiterreißfestigkeit mindestens 6 N/mm, Shore-A Härte (nach DIN 53505 an 6 mm dicken Probenkörpern bei 23 °C bestimmt) 30 bis 70.

11. Verbundsicherheitsglasscheibe mit einer Sollbruchstelle nach einem oder mehreren der Ansprüche 1 bis 10, **dadurch gekennzeichnet, dass** einer der Kunststoffe oder die Kunststoffe ein Gießharz und/oder eine polymere Folie enthalten.

12. Verbundsicherheitsglasscheibe mit einer Sollbruchstelle nach einem oder mehreren der Ansprüche 1 bis 11, **dadurch gekennzeichnet, dass** der Kunststoff zur Herstellung der Sollbruchstelle ausgewählt ist aus der Gruppe der Polyurethane, Polyester, Polyepoxyde, Polysiloxane oder Polyacrylate und/oder der Kunststoff zur Herstellung der polymeren Zwischenschicht, welche nicht die Sollbruchstelle darstellt, ausgewählt ist aus der Gruppe der Polyurethane, Polyester, Polyepoxyde, Polysiloxane, Polyacrylate, Polyvinylacethale oder Polyvinylacetate.

13. Verbundsicherheitsglasscheibe mit einer Sollbruchstelle nach Anspruch 12, **dadurch gekennzeichnet, dass** der Kunststoff zur Herstellung der Sollbruchstelle und/oder der Kunststoff zur Herstellung der polymeren Zwischenschicht, welche nicht die Sollbruchstelle darstellt, auf Polyacrylat basiert.

14. Verbundsicherheitsglasscheibe mit einer Sollbruchstelle nach einem oder mehreren der Ansprüche 1 bis 11, **dadurch gekennzeichnet, dass** der Kunststoff zur Herstellung der Sollbruchstelle ein thermoplastisches, bei Raumtemperatur dauerplastisches Material enthält oder aus diesem besteht.

15. Verbundsicherheitsglasscheibe mit einer Sollbruchstelle nach Anspruch 14, **dadurch gekennzeichnet, dass** das thermoplastische, bei Raumtemperatur dauerplastische Material aus einem nicht vernetzten oder teilvernetzten Polymer gebildet wird, wobei die Basis des Polymeren aus Homo, Co- oder Terpolymere des Isobutylens oder Mischungen davon, und/oder durch Copolymere von Acrylaten oder Methacrylaten oder Mischungen davon gebildet wird.

16. Verfahren zur Herstellung einer Verbundsicherheitsglasscheibe mit einer Sollbruchstelle, **dadurch gekennzeichnet, dass**
a) eine thermisch vorgespannte Glastafel mit einer Randabdichtung versehen wird,
b) als Sollbruchstelle ein Kunststoffmaterial an den dafür vorgesehenen Stellen auf die Glastafel aufgelegt wird,
c) auf die Glastafel an einer oder mehreren beliebigen Stellen ein oder mehrere harte Körper, welche eine höhere Härte als die des Glases aufweisen, aufgebracht werden,
d) auf diese Anordnung eine zweite thermisch vorgespannte Glastafel abgelegt wird,
e) der entstandene Glastafelverbund verpresst wird, und
f) in den verbleibenden Zwischenraum der Glastafeln ein Gießharz, welches im ausgehärteten Zustand eine höhere Reißfestigkeit, eine höhere Reißdehnung und eine höhere Weiterreißfestigkeit als der Kunststoff der Sollbruchstelle aufweist, eingefüllt und ausgehärtet wird.

17. Verfahren nach Anspruch 16, **dadurch gekennzeichnet, dass** für die Sollbruchstelle aus einem Gießharz eine Folie hergestellt wird, aus der in der Geometrie der späteren Sollbruchstelle Streifen ausgeschnitten und auf die Glastafel ausgelegt werden.

18. Verwendung einer Verbundsicherheitsglasscheibe mit einer Sollbruchstelle nach einem der Ansprüche 1 bis 15 in Gebäuden, Schienenfahrzeugen, Straßenfahrzeugen und Wasserfahrzeugen.

## Claims

1. Laminated safety glass window pane with a set rupture point, containing at least two tempered glass panes and a polymer intermediate layer, **characterised in that**
the polymer intermediate layer contains two plastics materials having a different resistance to tear (according to DIN 53504 of 03/85, measured on a standard S2 rod at a test speed of 100 mm/minute at 23°C), a different elongation at tear (according to DIN 53504 of 03/85, measured on a standard S2 rod at a test speed of 100 mm/minute at 23°C) and a different resistance to tear propagation (according to DIN 53556 of 08/82, on a 2 mm thick polymer film at a tear speed of 400 mm/minute at 23°C),
wherein the laminated glass window pane at the set rupture point contains the plastic with the lower resistance to tear, the lower elongation at tear and the lower resistance to tear propagation, and the laminated glass window pane in the region that does not include the set rupture point contains the plastic with the higher resistance to tear, the higher elongation at tear and the higher resistance to tear propagation, and
the laminated glass window pane contains at at least one point (the impact point) in the intermediate layer one or more bodies of a material whose hardness is greater than that of the glass which is used.

2. Laminated safety glass window pane with a set rupture point according to claim 1, **characterised in that** sheet glasses from the group comprising alkali-lime glasses, such as soda-lime glass, or borosilicate glasses are selected as glass window panes.

3. Laminated safety glass window pane with a set rupture point according to claim 1 or 2, **characterised in that** the Mohs hardness of the hard body or bodies at the impact point is >6.

4. Laminated safety glass window pane with a set rupture point according to claim 3, **characterised in that** the Mohs hardness of the hard body or bodies at the impact point is >7.

5. Laminated safety glass window pane with a set rupture point according to one or more of claims 1 to 4, **characterised in that** the hard bodies consist of grains or spheres.

6. Laminated safety glass window pane with a set rupture point according to one or more of claims 1 to 5, **characterised in that** the hard body or bodies at the impact point consist/consists of silicon carbide and/or of corundum.

7. Laminated safety glass window pane with a set rupture point according to one or more of claims 1 to 6, **characterised in that** the hard bodies have a size that is 0.1 to 0.3 mm less than the thickness of the plastic intermediate layer.

8. Laminated safety glass window pane with a set rupture point according to one or more of claims 1 to 7, **characterised in that** the hard bodies are embedded in polyisobutylene.

9. Laminated safety glass window pane with a set rupture point according to one or more of claims 1 to 8, **characterised in that** the plastic of the set rupture point has the following fracture mechanics properties: resistance to tear 0.01 to 2 MPa, elongation at tear 10 to 450%, resistance to tear propagation maximum 3 N/mm, Shore A hardness (measured according to DIN 53505 on 6 mm thick test bodies at 23°C) 1 to 40.

10. Laminated safety glass window pane with a set rupture point according to one or more of claims 1 to 9, **characterised in that** the plastic of the polymer intermediate layer not forming the set rupture point has the following fracture mechanics properties: resistance to tear at least 4 MPa, elongation at tear at least 200%, resistance to tear propagation at least 6 N/mm, Shore A hardness (measured according to DIN 53505 on 6 mm thick test bodies at 23°C) 30 to 70.

11. Laminated safety glass window pane with a set rupture point according to one or more of claims 1 to 10, **characterised in that** one or more of the plastics contains a casting resin and/or a polymer film.

12. Laminated safety glass window pane with a set rupture point according to one or more of claims 1 to 11, **characterised in that** the plastic for the production of the set rupture point is selected from the group comprising polyurethanes, polyesters, polyepoxides, polysiloxanes or polyacrylates, and/or the plastic for the production of the polymer intermediate layer that does not include the set rupture point, is selected from the group comprising polyurethanes, polyesters, polyepoxides, polysiloxanes, polyacrylates, polyvinyl acetals or polyvinyl acetates.

13. Laminated safety glass window pane with a set rupture point according to claim 12, **characterised in that** the plastic for the production of the set rupture point and/or the plastic for the production of the polymer intermediate layer that does not include the set rupture point is based on polyacrylate.

14. Laminated safety glass window pane with a set rupture point according to one or more of claims 1 to 11, **characterised in that** the plastic for the production of the set rupture point contains a thermoplastic material which is permanently plastic at room temperature or consists of such a material.

15. Laminated safety glass window pane with a set rupture point according to claim 14, **characterised in that** the thermoplastic material which is permanently plastic at room temperature is formed from a non-crosslinked or partially crosslinked polymer, wherein the polymer is based on homopolymers, copolymers or terpolymers of isobutylene or mixtures thereof, and/or is formed by copolymers of acrylates or methacrylates or mixtures thereof.

16. Method for the production of a laminated safety glass window pane with a set rupture point, **characterised in that**
a) a thermally tempered glass panel is provided with an edge seal,
b) a plastic material is applied as set rupture point to the glass panel at the points provided for this purpose,
c) one or more hard bodies whose hardness is greater than that of the glass are applied to the glass panel at one or more arbitrary points,
d) two thermally tempered glass panels are placed on this arrangement,
e) the resulting laminated glass panel is compressed, and
f) the remaining cavity between the glass panels is filled with a casting resin which in the cured state has a higher resistance to tear, a higher elongation at tear and a higher resistance to tear propagation than the plastic of the set rupture point, and is cured therein.

17. Method according to claim 16, **characterised in that** for the set rupture point a film is produced from a casting resin, from which film strips are cut out according to the geometry of the subsequent set rupture point, and are laid on the glass panels.

18. Use of a laminated safety glass window pane with a set rupture point according to one of claims 1 to 15 in buildings, track vehicles, road vehicles and watercraft.

## Revendications

1. Vitre de sécurité composite avec un point destiné à la rupture, constituée de deux vitres précontraintes au moins et d'une couche intermédiaire polymère, **caractérisée en ce que** la couche intermédiaire polymère contient deux matières artificielles ayant chacune une résistance à la déchirure différente (suivant DIN 53504 de 03/85, mesurée à l'éprouvette de traction S2 avec une vitesse de contrôle de 100 mm/minute à 23°C), une élongation à la rupture différente (suivant DIN 53504 de 03/85, mesurée à l'éprouvette de traction S2 avec une vitesse de contrôle de 100 mm/minute à 23°C) et une résistance à l'allongement d'une déchirure amorcée (suivant DIN 53356 de 08/82) différente, sur une feuille polymère d'une épaisseur de 2 mm à une vitesse de déchirure de 400 mm/minute à 23°C), la vitre de sécurité composite contenant au point destiné à la rupture la matière artificielle présentant la résistance à la déchirure plus faible, l'élongation à la rupture plus faible et la résistance à l'allongement d'une déchirure amorcée plus faible et **caractérisée en ce que** la vitre de sécurité composite contient la matière artificielle dont la résistance à la déchirure, l'élongation à la rupture et la résistance à l'allongement d'une déchirure amorcée sont plus élevées dans la zone qui ne représente pas le point destiné à la rupture et **caractérisée en ce que** la couche intermédiaire de la vitre de sécurité composite contient à un endroit (point d'impact) au moins un ou plusieurs corps en une matière dont la dureté est plus élevée que celle du verre utilisé.

2. Vitre de sécurité composite avec un point destiné à la rupture suivant la revendication 1, **caractérisée en ce que** des verres plats appartenant au groupe des verres sodico-calciques, tels que le verre sodé calcique, ou des verres au borosilicate ont été choisis comme vitres.

3. Vitre de sécurité composite avec un point destiné à la rupture suivant la revendication 1 ou 2, **caractérisée en ce qu'**au point d'impact la dureté selon Mohs du ou des corps durs est de > 6.

4. Vitre de sécurité composite avec un point destiné à la rupture suivant la revendication 3, **caractérisée en ce qu'**au point d'impact la dureté selon Mohs du ou des corps dur est de > 7.

5. Vitre de sécurité composite avec un point destiné à la rupture suivant une ou plusieurs des revendications 1 à 4, **caractérisée en ce que** les corps durs sont des grains ou des billes.

6. Vitre de sécurité composite avec un point destiné à la rupture suivant une ou plusieurs des revendications 1 à 5, **caractérisée en ce qu'**au point d'impact, le ou les corps durs sont en carbure de silicium ou en corindon.

7. Vitre de sécurité composite avec un point destiné à la rupture suivant une ou plusieurs des revendications 1 à 6, **caractérisée en ce que** les corps durs présentent une grosseur inférieure de 0,1 à 0,3 mm à l'épaisseur de la couche intermédiaire en matière artificielle.

8. Vitre de sécurité composite avec un point destiné à la rupture suivant une ou plusieurs des revendications 1 à 7, **caractérisée en ce que** les corps durs sont noyés dans de la polyisobutylène.

9. Vitre de sécurité avec un point destiné à la rupture suivant une ou plusieurs des revendications 1 à 8, **caractérisée en ce que** la matière artificielle du point destiné à la rupture présente les propriétés mécaniques de rupture suivantes: résistance à la déchirure comprise entre 0,01 et 2 MPa, élongation à la rupture comprise entre 10 et 450%, résistance à l'allongement d'une déchirure amorcée maximale de 3 N/mm, dureté Shore A (déterminée suivant DIN 53505 sur des éprouvettes d'une épaisseur de 6 mm, à 23°C) comprise entre 1 et 40.

10. Vitre de sécurité composite avec un point destiné à la rupture suivant une ou plusieurs des revendications 1 à 9, **caractérisée en ce que** la matière artificielle de la couche intermédiaire polymère ne formant pas le point destiné à la rupture présente les propriétés mécaniques de rupture suivantes: résistance à la déchirure égale à 4 MPa au moins, élongation à la rupture égale à 200% au moins, résistance à l'allongement d'une déchirure amorcée maximale égale à 6 N/mm au moins, dureté Shore A (déterminée suivant DIN 53505 sur des éprouvettes d'une épaisseur de 6 mm, à 23°C) comprise entre 30 et 70.

11. Vitre de sécurité composite avec un point destiné à la rupture suivant une ou plusieurs des revendications 1 à 10, **caractérisée en ce qu'**une des matières artificielles ou les deux matières artificielles contiennent une résine de coulée et/ou une feuille polymère.

12. Vitre de sécurité composite avec un point destiné à la rupture suivant une ou plusieurs des revendications 1 à 11, **caractérisée en ce que** la matière artificielle servant à réaliser le point destiné à la rupture est choisie parmi le groupe des polyuréthanes, des polyesters, des polyépoxydes, des polysiloxanes, des polyacrylates, des acétals polyvinylique ou des polyacétates de vinyle.

13. Vitre de sécurité composite avec un point destiné à la rupture suivant la revendication 12, **caractérisée en ce que** la matière artificielle servant à la réalisation du point destiné à la rupture et/ou la matière artificielle servant à la réalisation de la couche intermédiaire polymère ne formant pas le point destiné à la rupture est à base de polyacrylate.

14. Vitre de sécurité composite avec un point destiné à la rupture suivant une ou plusieurs des revendications 1 à 11, **caractérisée en ce que** la matière artificielle destinée à la réalisation du point destiné à la rupture contient ou consiste en une matière thermoplastique à plasticité permanente à température ambiante.

15. Vitre de sécurité composite avec un point destiné à la rupture suivant la revendication 14, **caractérisée en ce que** la matière thermoplastique à plasticité permanente à température ambiante est formée par un polymère non réticulé ou partiellement réticulé, la base du polymère étant formée d'homopolymère, de copolymère ou de terpolymère d'isobutylène ou d'un mélange de ceux-ci et/ou de copolymères d'acrylates ou de méthacrylates ou de mélanges de ceux-ci.

16. Procédé de fabrication d'une vitre de sécurité composite avec un point destiné à la rupture, **caractérisée en ce que**
a) le bord d'un pan de verre précontraint thermiquement est étanchéifié.
b) comme point destiné à la rupture, une matière artificielle est posée sur les endroits prévus à cet effet sur le pan de verre.
c) un ou plusieurs corps durs, dont la dureté est plus élevée que celle du verre sont posés à un ou plusieurs endroits du pan de verre,
d) un second pan de verre précontraint thermiquement est déposé sur cette structure.
e) le composite de pans de verre obtenu est comprimé.
f) l'espace intermédiaire demeurant entre les pans de verre est rempli d'une résine de coulée, qui, en état durci, présente une résistance à la déchirure, une élongation à la rupture et une résistance à l'allongement d'une déchirure amorcée plus élevées que celles de la matière artificielle au point destiné à la rupture, puis durci.

17. Procédé suivant la revendication 16, **caractérisé en ce que** pour le point destiné à la rupture, une feuille est fabriquée en une résine de coulée, feuille dans laquelle des bandes sont découpées qui présentent la géométrie du futur point destiné à la rupture et qui sont déposées sur le pan de verre.

18. Utilisation d'une vitre de sécurité composite avec un point destiné à la rupture suivant une des revendications 1 à 15 dans des bâtiments, des véhicules sur rails et des bateaux.
